# EUROPÄISCHE PATENTANMELDUNG

(11) **EP 4 197 778 A1**
(43) Veröffentlichungstag der Anmeldung: **21.06.2023**
(21) Anmeldenummer: 22211861.4
(22) Anmeldetag: 07.12.2022
(51) Int. Cl.: B32B 7/06, B32B 3/06, B32B 25/04, B32B 25/08, B32B 25/18, B32B 27/08, B32B 27/32

(54) **SELBSTHEILENDES POLYOLEFIN-MULTISCHICHT-KONSTRUKT MIT EINFACHEM OPTIONALEM SCHICHTAUSTAUSCH UND OPTIONALEN DESIGN-APPLIKATIONEN SOWIE SEQUENZIELLER SCHICHTABNAHME ZUR SICHERSTELLUNG KLINISCH REINER OBERFLÄCHEN**

(30) Priorität: 20.12.2021 DE 102021214710
(71) Anmelder: Benecke-Kaliko AG, 30419 Hannover (DE)
(72) Erfinder: Neumann, Thorsten, 30165 Hannover (DE); Klaß, Michaela, 30165 Hannover (DE)
(74) Vertreter: Continental Corporation

(57) **Zusammenfassung**

Die Erfindung betrifft ein Polyolefin-Mono- oder -Multischicht-Konstrukt, umfassend eine oder mehrere durch eine Polyolefindispersion gebildete Polyolefinschichten auf einem Träger, wobei mindestens eine Polyolefinschicht eine Polyisobutylen-enthaltende Polyolefinschicht ist, die 0,1 bis 75 Gewichtsteile Polyisobutylen pro 100 Gewichtsteilen Polyolefin in der Schicht enthält, und ein Verfahren zur Herstellung davon.

Die Erfindung eignet sich als Bezugsmaterial oder Kunstleder, insbesondere als selbstheilendes Bezugsmaterial oder Kunstleder oder als Bezugsmaterial oder Kunstleder mit erneuerbarer Oberfläche.

## Beschreibung

Die Erfindung betrifft ein Polyolefin-Mono- oder -Multischicht-Konstrukt auf Basis von Polyolefinschichten und deren Verwendung sowie ein Verfahren zur Herstellung von Polyolefin-Mono- oder -Multischicht-Konstrukten.

Polyolefine werden im Bereich Kunstleder und Filme im Automobil- und Industriebereich eingesetzt. Dabei werden diese Filme, die meist aus PP und PE bestehen, mit Additiven und/ oder Copolymeren versehen, um gewünschte Eigenschaften zu erreichen. Die Filme werden im Normalfall via Extrusion oder Kalandertechnik hergestellt. Ein textiler Träger wird zur Herstellung von Kunstleder-Systemen direkt oder nachträglich einkaschiert. Alternativ werden Schäume und Abstandssysteme einkaschiert, um eine Weichheit zu erreichen.

Polyolefinbeschichtungen werden auch mit polyolefinbasierten textilen Trägern kombiniert, um ein Monomaterial zu generieren.

Polyolefindispersionen stellen eine Alternative zu den festen Rohstoffen für Polyolefinprodukte dar. Sie sind vornehmlich für den Verpackungsbereich oder die Metallbeschichtung entwickelt worden und können mit konventionellen Streichprozessen in mehreren Schichten aufeinander appliziert werden.

Zusätzlich besteht die Möglichkeit, diese Dispersionen zu vernetzen, was durch Carboxylgruppen im Polymer ermöglicht wird. Diese funktionellen Gruppen sind meist notwendig, um eine stabile Dispersion aufgrund der erhöhten Hydrophilie und der elektrostatischen Abstoßung zwischen den Latexpartikeln zu erhalten.

Beim Gebrauch von Bezugsmaterialien wie Kunstleder ergeben sich Abnutzungserscheinungen wie Beschädigungen, z.B. Risse oder Schnitte, oder Anschmutzungen, z.B. eine Ansiedlung von Bakterien oder Viren. Ein Austausch des kompletten Bezugsmaterials zur Erneuerung der Oberfläche ist aufwändig und daher gewöhnlich nicht wünschenswert.

Im Hinblick auf den diskutierten Stand der Technik ergeben sich bei Produkten auf Polyolefinbasis etwa folgende Probleme:
1. Materialien auf Basis von am Markt verfügbaren Polyolefindispersionen (z.B. die Produkte Hypod^{®} und Canvera^{®} von DOW) sind in ihrer Weichheit beschränkt, sodass nur gewisse Einsatzbereiche wie als Verpackung oder Dosenbeschichtung möglich sind.
2. Die Materialien auf Polyolefinbasis weisen keine oder eine nur sehr begrenzte Tendenz der Selbstheilung auf. KR 101682047 B1 beschreibt hierfür Maleinsäure-modifizierte Polymere.
3. Ein einfacher Austausch von Haptik und chemischer Resistenz der Filme ist nur durch kompletten Austausch des verbauten Kunstleders umsetzbar.
4. Eine einfache Anpassung von Designoptionen wie Narbe und Farbe ist nur durch Komplettaustausch möglich.
5. Eine sequenzielle Abnahme von Schichten aus einem Schichtkonstrukt wie Kunstleder zu Reinigung der Oberfläche ist nicht bekannt.

Polyisobutylene (PIB) finden in der Lebensmittelverpackungsindustrie Anwendung, beispielsweise bei wiederverschließbaren Käseschalen. Ferner werden diese Polymere auch im Bereich Motoröle als Viskositätsadditiv eingesetzt. Polyisobutylen-Polymere sind bekannt für ihren kalten Fluss in Abhängigkeit von dem Molekulargewicht des Polymers. So fließt ein Polymer mit geringeren Molekulargewichten (z.B. Oppanol^{®} B 10 N) leicht und passt sich den Unebenheiten einer Oberfläche deutlich schneller an als die höhermolekularen Typen (z.B. Oppanol^{®} B 15 N). Die Anpassung kann im Bereich von Sekunden bis hin zu Monaten erfolgen.

Die Aufgabe der vorliegenden Erfindung besteht darin, Polyolefin-Mono- oder -Multischicht-Konstrukte mit einer guten Weichheit bereitzustellen, die für Applikationen wie Kunstleder geeignet sind, wobei die Polyolefinkonstrukte insbesondere selbstheilende Eigenschaften und/oder eine ablösbare Oberschichtstruktur, die eine Erneuerung der Oberfläche ohne Austausch des gesamten Konstrukts ermöglicht, aufweisen sollen.

Die Erfinder haben überraschenderweise festgestellt, dass diese Aufgabe durch den Einsatz von Dispersionen auf Basis von Polyolefinen (POD), die zumindest teilweise Polyisobutylen (PIB) enthalten, gelöst werden kann.

Die Erfindung betrifft somit ein Polyolefin-Mono- oder -Multischicht-Konstrukt, umfassend eine oder mehrere durch eine Polyolefindispersion gebildete Polyolefinschichten auf einem Träger, wobei mindestens eine Polyolefinschicht eine Polyisobutylen-enthaltende Polyolefinschicht ist, die 0,1 bis 75 Gewichtsteile Polyisobutylen pro 100 Gewichtsteilen Polyolefin in der Schicht enthält.

Polyisobutylen ist ebenfalls ein Polyolefin. Der Ausdruck "pro 100 Gewichtsteilen Polyolefin in der Schicht" bezieht sich dabei auf den Gesamtanteil an Polyolefin, d.h. einschließlich Polyisobutylen, in der Schicht. Wenn beispielsweise 30 Gew.-Teile PIB und 70 Gew.-Teile Polyolefin, welches von PIB verschieden ist, in der Schicht enthalten sind, entspricht dies 30 Gew.-Teilen PIB pro 100 Gew.-Teilen Polyolefin. Entsprechend sind in einer Polyolefindispersion, aus der diese Schicht gebildet wird, ebenfalls 30 Gew.-Teile PIB pro 100 Gew.-Teilen Polyolefin enthalten.

Es wurde überraschenderweise festgestellt, dass das erfindungsgemäße Polyolefin-Mono- oder -Multischicht-Konstrukt selbstheilende Eigenschaften aufweist. Die Konstrukte ermöglichen auch, Teile des Schichtsystems vom Rest des Konstrukts abzulösen. Durch die Abnahme der oberen Schichtkonstruktion bildet die darunterliegende Schicht die neue Oberfläche oder die darunterliegende Schicht kann wieder mit der abgenommen oberen Schichtkonstruktion oder einer anderen oberen Schichtkonstruktion verbunden werden.

Das erfindungsgemäße Polyolefin-Mono- oder -Multischicht-Konstrukt bietet die Möglichkeit, einen Austausch der narb-, farb- und/oder haptikgebenden Oberschicht zu ermöglichen, ohne dass der komplette Austausch des beim Gebrauch vernähten Konstrukts erforderlich ist.

Insbesondere können durch das erfindungsgemäße Polyolefin-Mono- oder -Multischicht-Konstrukt folgende Vorteile erreicht werden:
- Selbstheilung von Polyolefin-Filmen
- Abziehmöglichkeiten zur Verwendung mehrerer Schichten
- Viren- und bakterienfreie Oberflächen durch sequenziell abziehbare Oberkonstruktion
- Anpassung von Design-Effekten der Oberschicht durch beliebiges Anhaften und Entnehmen der Oberkonstruktion
- Lokale thermische Aktivierung der Grenzflächen durch IR-transparente Cool Color Pigmente in der Oberkonstruktion und IR-absorbierende Materialien oder Farbmitteln, idealerweise Ruß, in der Unterkonstruktion zur einfacheren Entfernung von Filmen von der Haftungsgrenzfläche
- Monomaterialkonstruktion einer Polyolefinschicht mit PIB-Anteil in Kombination mit einem textilen Träger auf Basis von Polyolefinen.

Die Erfindung wird in den beigefügten Zeichnungen erläutert. Dabei zeigt:
- Fig. 1: ein schematisches Beispiel eines erfindungsgemäßen Polyolefin-Mono- oder -Multischicht-Konstrukts im Querschnitt
- Fig. 2: ein schematisches Beispiel eines weiteren erfindungsgemäßen Polyolefin-Mono- oder -Multischicht-Konstrukts im Querschnitt
- Fig. 3: einen Austausch der Oberschichtkonstruktion des Konstrukts von Fig. 1
- Fig. 4: das erfindungsgemäße Polyolefin-Mono- oder -Multischicht-Konstrukt gemäß Fig. 1 mit IR-transparenten Pigmenten in der Oberschichtkonstruktion
Nachfolgend wird die Erfindung ausführlich erläutert.

Die folgenden Angaben beziehen sich in gleicher Weise auf das erfindungsgemäße Polyolefin-Mono- oder -Multischicht-Konstrukt, das erfindungsgemäße Verfahren und die erfindungsgemäße Verwendung, sofern nicht ausdrücklich anders angegeben.

Das erfindungsgemäße Polyolefin-Mono- oder -Multischicht-Konstrukt umfasst eine oder mehrere durch eine Polyolefindispersion gebildete Polyolefinschichten auf einem Träger, wobei mindestens eine Polyolefinschicht eine Polyisobutylen-enthaltende Polyolefinschicht ist, die 0,1 bis 75 Gewichtsteile Polyisobutylen pro 100 Gewichtsteilen Polyolefin in der Schicht enthält.

Das Polyolefin-Mono- oder -Multischicht-Konstrukt ist ein Konstrukt oder System, dass ein oder mehrere Polyolefinschichten umfasst, die auf einem Träger angeordnet sind. Die ein oder mehrere Polyolefinschichten werden auch als Film bezeichnet.

Eine durch eine Polyolefindispersion gebildete Polyolefinschicht bedeutet eine Polyolefinschicht, die durch Aufbringen einer Polyolefindispersion auf ein Substrat bzw. einen Träger, das bzw. der bereits mit Polyolefinschichten versehen sein kann, und thermische Behandlung der aufgebrachten Dispersion gebildet wird. Die aufzubringende Polyolefindispersion kann in Form einer Paste vorliegen.

Ein Unterschied von durch Polyolefindispersion gebildete Polyolefinschichten zu Polyolefinfilmen bzw. -schichten, die durch Extrusions- oder Kalanderverfahren hergestellt werden, stellen die mechanischen Eigenschaften dar. Durch Extrusion oder Kalandrieren gebildete Schichten weisen durch intensive Scherbelastungen während der Herstellung in Quer- und Längsrichtung unterschiedliches Spannungs-Dehnungsverhalten auf (anisotrope mechanische Eigenschaften). Die dispersionsbasierten Polyolefinschichten zeigen jedoch isotrope mechanische Eigenschaften, d.h. das Spannungs-Dehnungsverhalten ist in allen Raumrichtungen im Wesentlichen gleich. Die isotropen Eigenschaften der Schichten können z.B. das Aufkaschieren von Trägern vereinfachen.

Vorzugsweise sind alle Polyolefinschichten des erfindungsgemäßen Konstrukts durch eine Polyolefindispersion gebildet. In einigen Ausführungsformen werden als Träger textile Träger eingesetzt, die mit einem Polyolefinmaterial als Kaschiermaterial versehen sind. Diese Träger sind genauso wie alle anderen Träger keine Polyolefinschichten im erfindungsgemäßen Sinne. Sofern im Folgenden auf Polyolefinschichten Bezug genommen wird, sind durch eine Polyolefindispersion gebildete Polyolefinschichten gemeint, sofern nicht anders angegeben.

Das Polyolefin-Mono- oder -Multischicht-Konstrukt weist ein oder mehrere, bevorzugt mindestens zwei, bevorzugter mindestens drei durch eine Polyolefindispersion gebildete Polyolefinschichten auf. Wenn mehr als eine Polyolefinschicht vorhanden ist, können deren Zusammensetzungen gleich oder verschieden sein, z.B. hinsichtlich des Anteils an Polyisobutylen, des Typs des Polyolefins, das von Polyisobutylen verschieden ist, und/oder der Art und Menge an Additiven.

Polyolefindispersionen enthalten festes Polyolefin, insbesondere Polyolefinpartikel, die in einem flüssigen Dispersionsmittel dispergiert sind. Das Dispersionsmittel kann z.B. Wasser, ein organisches Lösungsmittel, wie z.B. Alkohol, oder eine Mischung davon sein. Die Polyolefindispersion ist bevorzugt eine wässrige Polyolefindispersion. Das Dispersionsmittel ist bevorzugt Wasser.

Die durch eine Polyolefindispersion gebildeten Polyolefinschichten in dem erfindungsgemäßen Konstrukt enthalten ein oder mehrere Polyolefine, die von Polyisobutylen verschieden sind, wobei in mindestens einer Polyolefinschicht zusätzlich ein oder mehrere Polyisobutylene enthalten sind. Es versteht sich, dass die Polyolefine in der Polyolefinschicht und die Polyolefine in der Polyolefindispersion, aus der sie gebildet ist, sich entsprechen.

Beispiele für geeignete Polyolefine, die von Polyisobutylen verschieden sind, sind Polyethylen, Polypropylen und/oder Copolymere davon, insbesondere Polyethylen/Polypropylen-Copolymere oder Ethylen-Propylen-Diene. In einer bevorzugten Ausführungsform ist das von Polyisobutylen verschiedene Polyolefin ausgewählt aus Polyethylenen, Polypropylenen, Ethylen-Propylen-Copolymeren, Copolymeren von Ethylen und/oder Propylen mit einem oder mehreren C₄-C₁₀-Olefinen, bevorzugt alpha-Olefinen. Die C₄-C₁₀-Olefine, bevorzugt alpha-Olefine, sind bevorzugt C₄-C₈-Olefine, wie z.B. 1-Buten, 1-Hexen oder 1-Octen.

Geeignete von Polyisobutylen verschiedene Polyolefine weisen z.B. einen Glasübergangspunkt von -53 bis -26°C auf. Geeignete von Polyisobutylen verschiedene Polyolefine weisen z.B. einen Schmelzpunkt von 63 bis 85°C auf.

Das Polyolefin für die Dispersion kann gegebenenfalls mit funktionellen Gruppen modifiziert sein, z.B. mit sauren Gruppen wie Carboxylgruppen. Die funktionellen Gruppen können die Dispergierung erleichtern.

Geeignete Polyolefindispersionen von Polyolefinen, die von Polyisobutylen verschieden sind, sind im Handel erhältlich, z.B. unter den Handelsnamen Hypod^{®} und Canvera^{®} von Dow Chemical. EPDM-Dispersionen sind von Lion Elastomers erhältlich. Solche Polyolefindispersionen können als Ausgangsmaterial dienen.

Polyisobutylen (PIB) wird auch als Polyisobuten bezeichnet. Polyisobutylene sind im Handel erhältlich, z.B. unter den Handelsnamen Glissopal^{®} und Oppanol^{®} von BASF. Geeignete Polyisobutylene sind z.B. Glissopal^{®} V 190-1500, Oppanol^{®} B 10-15 und Oppanol N^{®} 50-150.

Polyisobutylen kann als Reinsubstanz eingesetzt werden, was jedoch eine ausreichende Dispergierung erfordert, um eine geeignete Partikelgröße zu gewährleisten. Einfacher ist die Verwendung als Dispersion, insbesondere als wässrige Dispersion. Dispersionen dieser Art werden von der Firma Emulco hergestellt. Geeignete PIB-Dispersionen sind z.B. Emulco AquaPIB^{®} 60-25-L02 (PIB = Glissopal^{®} V1500) und Emulco AquaPIB^{®} 60-25-150 (PIB = Oppanol^{®} B 15).

Die Teilchengröße von Polyisobutylen in der Polyolefindispersion kann z.B. 20 nm bis 500 µm, bevorzugt 0,1 bis 100 µm, betragen.

Das erfindungsgemäße Polyolefin-Mono- oder -Multischicht-Konstrukt enthält mindestens eine durch eine Polyolefin gebildete Polyolefinschicht, die eine Polyisobutylen-enthaltende Polyolefinschicht ist, die 0,1 bis 75 Gewichtsteile Polyisobutylen, bevorzugt 0,5 bis 75 Gewichtsteile Polyisobutylen, bevorzugter 25 bis 75 Gew.-Teile Polyisobutylen, besonders bevorzugt 40 bis 75 Gewichtsteile Polyisobutylen, pro 100 Gewichtsteilen Polyolefin in der Schicht enthält. Das Polyolefin-Mono- oder -Multischicht-Konstrukt kann eine, zwei, drei oder mehr Polyisobutylen-enthaltende Polyolefinschichten mit den genannten Mengen, wie z.B. 25 bis 75 Gew.-Teile oder 40 bis 75 Gewichtsteile PIB pro 100 Gew.-Teilen Polyolefin, aufweisen.

Es sei in diesem Zusammenhang der Vollständigkeit halber darauf hingewiesen, dass das erfindungsgemäße Polyolefin-Mono- oder -Multischicht-Konstrukt allgemein keine Polyolefinschicht enthält, die mehr als 75 Gewichtsteile Polyisobutylen pro 100 Gewichtsteilen Polyolefin in der Schicht enthält.

Am Markt verfügbare Polyolefin-Dispersionen, die kein Polyisobutylen enthalten, wie z.B. die vorstehend genannten Dow Produkte Hypod^{®} und Canvera^{®}, sind in ihrer Weichheit beschränkt. Durch die Abmischung mit Polyisobutylenen kann die Weichheit und die Elastizität der erstellten Schicht über das Mischungsverhältnis zwischen Polyolefindispersion (z.B. Hypod^{®} 1000) und Polyisobutylen sowie die Molmasse der Polymere eingestellt werden.

Die Abmischungen der Polyolefindispersion (z.B. DOW Hypod 1000) mit Polyisobutylen oder einer PIB-Dispersion (z.B. Emulco Aquapib, z.B. 60-25-150, PIB = Oppanol B15) kann in oben genannten Verhältnissen erfolgen. Die Festigkeit des Films bei Anteilen an PIB oberhalb von 75 Gewichtsteilen Polyisobutylen pro 100 Gewichtsteilen Polyolefin ist dabei so reduziert, dass dieser Film für die beabsichtigte Anwendung nicht geeignet ist.

Die Klebrigkeit der Schicht erhöht sich mit steigendem Anteil an PIB und steigender Temperatur. Überraschenderweise konnte feststellt werden, dass die Schichten bei Raumtemperatur eine minimale Klebrigkeit beim Berühren aufweisen. Diese Klebrigkeit kann durch das Molekulargewicht des PIB eingestellt werden.

Das eingesetzte Polyisobutylen weist bevorzugt ein mittleres Molekulargewicht (Gewichtsmittel) von mindestens 2000 g/mol, bevorzugt mindestens 40.000, bis 150.000 g/mol, bevorzugt 53.000 g/mol bis 108.000 g/mol, auf, um eine Klebrigkeit der gebildeten Schicht zu vermeiden. Glissopal V 1500 (2.300 g/mol), Oppanol B10 (53.000 g/mol) und Oppanol B15 (108.000 g/mol) sind z.B. geeignet. Es können Mischungen von Polyisobutylenen mit höherem und niedrigerem Molekulargewicht eingesetzt werden.

Die eine oder mehreren eingesetzten Polyolefindispersionen mit oder ohne PIB und damit die daraus gebildeten Polyolefinschichten können ferner unabhängig voneinander ein oder mehrere Additive aufweisen, z.B. ausgewählt aus Vernetzern, Füllstoffen, Verdickungsmitteln, Flammschutzmitteln, Stabilisatoren gegen Abbau oder Alterung und Farbmitteln.

Vernetzer können z.B. dazu dienen, die Härte und Temperaturbeständigkeit der Schichten zu erhöhen. Bei einer solchen Ausführungsform kann mindestens eine Polyolefinschicht eine mit einem Vernetzer vernetzte Polyolefinschicht sein. Die Vernetzung kann dabei über die vorstehend genannten funktionellen Gruppen wie Carboxygruppen des Polyolefins erfolgen.

Falls eingesetzt, können Vernetzer z.B. in einer Menge von 0,1 bis 10 Gewichtsteilen pro 100 Gewichtsteilen Polyolefin verwendet werden. Beispiele für geeignete Vernetzter sind Vernetzer auf Basis von polymeren Aziridinen, bi- oder höherfunktionellen Isocyanaten oder Carbodiimiden oder multifunktionellen Vernetzern.

Beispiele für Verdicker sind Polyurethane, Acrylate, Alginate, Harnstoff-basierte Verdicker und Tonminerale.

Beispiele für Flammschutzmittel sind Hydroxide, z.B. Aluminium- und Magnesiumhydroxide, z.B. ATH (Aluminiumtrihydrat), Carbonate, z.B. Calciumcarbonate, organische und anorganische Phosphor- und Stickstoffverbindungen, Borverbindungen und Halogenverbindungen.

Farbmittel können Farbstoffe oder Pigmente sein. Beispiele für geeignete Farbmittel sind anorganische oder organische Farbmittel, Effektfarbmittel, Metalleffektfarbmittel, Quantumdots, IR-transparente Farbmittel, Fluoreszenzfarbmittel, Phosphoreszenzfarbmittel oder Mischungen davon.

Für die Herstellung der zur Bildung der Polyolefinschicht eingesetzten Polyolefindispersion, bevorzugt wässrigen Polyolefindispersion, werden in der Regel Polyolefindispersionen von Polyolefinen, die von PIB verschieden sind, und sofern eine PIB-enthaltende Polyolefinschicht gebildet werden soll, zusätzlich PIB-Dispersionen als Ausgangsmaterialien eingesetzt. Eine als Ausgangsmaterial eingesetzte Polyolefindispersion von Polyolefinen, die von PIB verschieden sind, die bevorzugt wässrig ist, kann z.B. ein Trockengewicht (bezogen auf das Gesamtgewicht der Dispersion) von 10 bis 60 Gew.-%, bevorzugt 40 bis 60 Gew.-%, aufweisen. Eine als Ausgangsmaterial eingesetzte PIB-Dispersion, bevorzugt wässrige PIB-Dispersion, kann z.B. ein Trockengewicht (bezogen auf das Gesamtgewicht der Dispersion) von 45 bis 85 Gew.-%, bevorzugt 55 bis 60 Gew.-%, aufweisen.

Der Gesamtanteil an Polyolefin einschließlich PIB in einer Polyolefinschicht, bezogen auf das Gesamtgewicht der Schicht, kann z.B. im Bereich von 30 bis 95 Gew.-%, bevorzugt 85 bis 95 Gew.-%, betragen.

Das Flächengewicht für eine Polyolefinschicht (trocken) kann z.B. im Bereich von 2 bis 200 g/m² liegen.

Das erfindungsgemäße Polyolefin-Mono- oder -Multischicht-Konstrukt umfasst einen Träger, auf dem der Mono- oder -Multischichtfilm mit einer oder mehreren durch eine Polyolefindispersion gebildete Polyolefinschichten aufgebracht ist. Der Träger kann z.B. ein Substrat wie ein Release-Papier, Narbband, Silikonband oder Metallband sowie ein textiler Träger sein. Üblicherweise wird das Konstrukt über ein Umkehrbeschichtungsverfahren hergestellt, in dem der Mono- oder -Multischichtfilm auf einem Substrat hergestellt wird, der Träger an den gebildeten Film angebracht wird und anschließend das Substrat entfernt wird.

Der Träger des Polyolefin-Mono- oder -Multischicht-Konstrukts ist bevorzugt ein textiler Träger. Der textile Träger kann z.B. ein Vlies, Gewirke, Gestricke oder Gewebe sein. Der textile Träger kann z.B. aus Baumwolle, Polyester, wie Polyethylenterephthalat, Mischungen von Baumwolle und Polyester, Lyocell^{®}, Polyamid, Polyacrylate, Polyolefin, Aramid, Polymethylpenten (TPX), Carbonfaser, Glasfaser, Mineralfaser oder Mischungen davon sein.

Der textile Träger ist besonders bevorzugt ein textiler Polyolefinträger. In einer bevorzugten Ausführungsform ist der textile Träger mit einem Kaschiermaterial, gewöhnlich aus Kunststoff, insbesondere aus Polyolefin, versehen, der gewöhnlich weitgehend in den textilen Träger eindringt.

Als Kaschiermaterial wird bevorzugt ein Polyolefin mit einem hohen Anteil an von PIB verschiedenem Polyolefin, z.B. 75 bis 100 Gewichtsteile pro 100 Gewichtsteilen Polyolefin, eingesetzt. Der hohe Anteil an von PIB verschiedenem Polyolefin ermöglicht eine gute Textilhaftung in der Dispersionsmasse durch Minimierung des kalten Flusses. Ein solcher mit Polyolefin als Kaschiermasse versehener textiler Träger kann gut an den gebildeten Mono- oder -Multischichtfilm kaschiert werden, bevorzugt an eine als Haftungsschicht dienende PIB-enthaltende Polyolefinschicht. Solche mit einem Kaschiermaterial aus Polyolefin versehene textile Träger werden nicht als Polyolefinschicht im Sinne der vorliegenden Erfindung angesehen.

Das Konstrukt kann über den Träger, insbesondere den textilen Träger, mit einem Bauteil verbunden werden, z.B. durch Vernähen oder Kleben, und dient so als Bezugsmaterial.

In einer Ausführungsform ist das erfindungsgemäße Polyolefin-Mono- oder -Multischicht-Konstrukt mit einer ein- oder mehrschichtigen Lackschicht als obersten Schicht versehen, d.h. über der oberen Polyolefinschicht. Die Lackschicht kann z.B. als Schutzschicht oder zur Einstellung des Glanzes dienen. Es können die auf dem Gebiet üblichen Lacke verwendet werden. Die Lackschicht ist in der Regel transparent oder transluzent.

In einer bevorzugten Ausführungsform umfasst das erfindungsgemäße Polyolefin-Mono- oder -Multischicht-Konstrukt mindestens zwei durch eine Polyolefindispersion gebildete Polyolefinschichten, wobei mindestens eine Polyisobutylen-enthaltende Polyolefinschicht eine Haftungsschicht ist und die zweite Polyolefinschicht eine über der Haftungsschicht liegende obere Polyolefinschicht ist.

Die obere Polyolefinschicht enthält bevorzugt 75 bis 100 Gewichtsteile Polyolefin, das von Polyisobutylen verschieden ist, pro 100 Gewichtsteilen Polyolefin in der Schicht, d.h. diese Polyolefinschicht kann frei von PIB sein.

Bei dem erfindungsgemäßen Polyolefin-Mono- oder -Multischicht-Konstrukt befindet sich der Träger unten. Die Polyolefinschichten liegen darüber (oben). Mit der oberen Polyolefinschicht ist die Polyolefinschicht gemeint, die bezogen auf die enthaltenen Polyolefinschichten die oberste Schicht ist. Es sei darauf hingewiesen, dass die Schichtreihenfolge bei dem Zwischenprodukt auf einem Substrat, welches beim Umkehrbeschichtungsverfahren erhalten wird, gewöhnlich umgekehrt ist, da der andere Träger gewöhnlich auf der Seite des Schichtverbunds angebracht wird, die nicht mit dem Substrat verbunden ist bzw. war.

Die obere Polyolefinschicht ist beim Gebrauch gewöhnlich sichtbar. Die obere Polyolefinschicht ist bevorzugt eine narbtragende und/oder farbtragende Polyolefinschicht. Besonders bevorzugt ist die obere Polyolefinschicht eine narbtragende und gegebenenfalls farbtragende Schicht. Die obere Polyolefinschicht kann gegebenenfalls auch haptiktragend sein.

In einer besonders bevorzugten Ausführungsform umfasst das erfindungsgemäße Polyolefin-Mono- oder -Multischicht-Konstrukt eine Unterschichtkonstruktion, die eine untere Haftungsschicht enthält, und eine darüber liegende Oberschichtkonstruktion, die eine obere Polyolefinschicht und eine darunterliegende obere Haftungsschicht enthält, wobei die untere und die obere Haftungsschicht Polyisobutylen-enthaltende Polyolefinschichten sind, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin in der Schicht enthalten, und die obere Polyolefinschicht eine durch eine Polyolefindispersion gebildete Polyolefinschicht ist, die bevorzugt 75 bis 100 Gewichtsteile Polyolefin, das von Polyisobutylen verschieden ist, pro 100 Gewichtsteilen Polyolefin in der Schicht enthält.

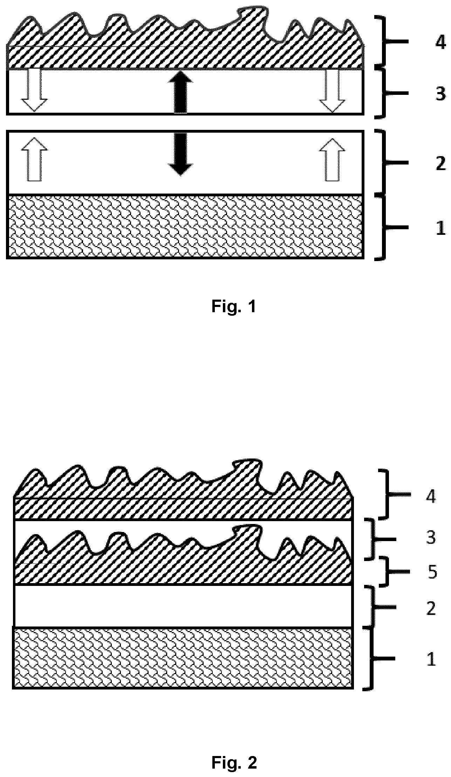

Eine solche Ausführungsform ist in Fig. 1 gezeigt, wobei über der oberen Polyolefinschicht ein Lackschicht angeordnet werden kann. Diese Konstruktion ermöglicht eine Entfernung der Oberschichtkonstruktion, z.B. durch Abziehen.

Die Oberschichtkonstruktion besteht aus mindestens zwei Polyolefinschichten, wobei die obere Polyolefinschicht bevorzugt eine narbtragende Schicht ist, und die darunterliegende obere Haftungsschicht eine haftvermittelnde Schicht ist. Die obere Polyolefinschicht weist idealerweise einen hohen Anteil an von Polyisobutylen verschiedenem Polyolefin (75 bis 100 Gew.-Teile pro Gewichtsteilen Polyolefin) auf, um mögliche Erscheinungen wie kalten Fluss zu vermeiden.

Die obere und untere Haftungsschicht können in diesem Aufbau beliebig oft getrennt und wieder verbunden werden, ohne dass es zu einer nennenswerten Reduktion der Haftung kommt.

Bei der vorstehend beschriebenen bevorzugten Ausführungsform mit Oberschichtstruktur und Unterschichtstruktur können die untere Haftungsschicht und die obere Haftungsschicht miteinander in Kontakt sein.

Alternativ kann die Unterschichtkonstruktion zusätzlich eine obere Ersatzschicht umfassen, die über der unteren Haftungsschicht angeordnet ist und eine durch eine Polyolefindispersion gebildete Polyolefinschicht ist, die bevorzugt 75 bis 100 Gewichtsteile Polyolefin, das von Polyisobutylen verschieden ist, pro 100 Gewichtsteilen Polyolefin in der Schicht enthält. Eine solche Ausführungsform ist in Fig. 2 gezeigt.

Die obere Ersatzschicht kann analog der oberen Polyolefinschicht eine narbtragende Schicht und/oder eine Farbmittel-enthaltende Schicht sein, bevorzugt eine narbtragende und gegebenenfalls Farbmittel-enthaltende Schicht. Beispiele für geeignete Farbmittel sind die vorstehend für die obere Polyolefinschicht genannten Farbmittel.

Zwischen der Oberschichtkonstruktion und der Unterschichtkonstruktion können ein oder mehrere Zwischenschichtkonstruktionen mit jeweils einer weiteren oberen Ersatzschicht und einer weiteren unteren Haftungsschicht angeordnet sein. Diese Zwischenschichtkonstruktionen sind analog der Oberschichtkonstruktion.

Dadurch kann ein Sandwichsystem mit abnehmbaren oberen Polyolefinschichten durch einen Aufbau aus alternierenden Haftungsschichten und oberen Polyolefinschichten bzw. oberen Ersatzschichten erhalten werden. Wird beispielsweise die erste obere Polyolefinschicht irreversibel beschädigt oder verschmutzt, kann diese direkt mit der darauffolgenden Haftungsschicht von der nachfolgenden oberen Ersatzschicht entfernt werden, die dann zu der oberen Polyolefinschicht wird. Diese Konstruktion kann beispielsweise im Sanitär- oder Medizinbereich Verwendung finden, wo Kontaminationen vermieden werden sollten. Somit kann auch eine virenfreie und bakterienfreie Oberfläche garantiert werden.

Um die sequenzielle Entfernung der jeweiligen Oberschichtstruktur bzw. Zwischenstruktur zu gewährleisten, werden an den Außenseiten bei jeder Haftungsschicht bevorzugt Abziehschlaufen, z.B. aus Polyester, eingelassen. Diese Abziehschlaufen verhindern die Haftung zwischen den Schichten und ermöglicht lokal eine Abziehmöglichkeit.

In einer bevorzugten Ausführungsform sind in dem erfindungsgemäßen Polyolefin-Mono- oder -Multischicht-Konstrukt daher in mindestens einer Haftungsschicht, bevorzugt in mindestens der oberen Haftungsschicht, eine oder mehrere seitlich vom Konstrukt herausstehende Abziehvorrichtungen, bevorzugt Abziehschlaufen, eingelassen. Die Abziehvorrichtungen sind bevorzugt aus Polyolefin.

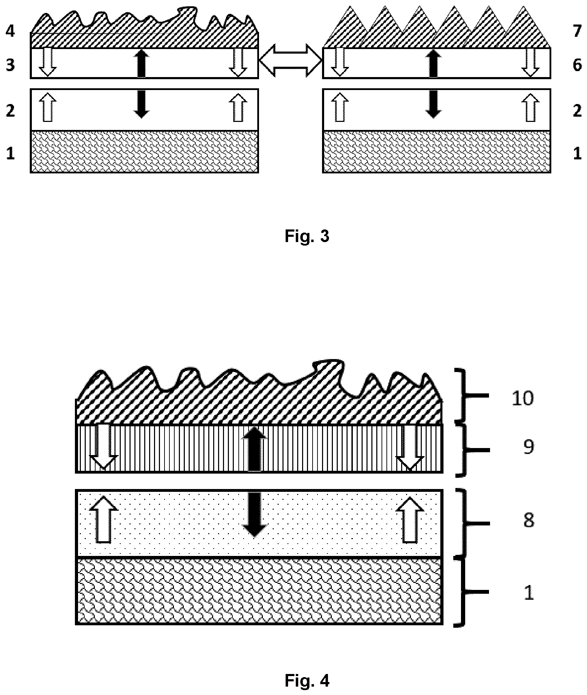

Durch die zwei oben genannten Konstruktionen gemäß Fig. 1 und Fig. 2 ist es möglich, das Design des erfindungsgemäßen Konstrukts bzw. eines damit überzogenen Gegenstands zu variieren, indem entweder auf eine Unterschichtkonstruktion beliebig oft austauschbare Designelemente mit entsprechender Haftungsschicht aufgebracht oder abnehmbare Elemente davon entfernt werden können. Beispielsweise wäre es somit möglich, die Farbe und/oder Narbe eines Sitzes durch eine andere Narbe und/oder Farbe auszutauschen, ohne den Sitz dabei vollständig ersetzen zu müssen. Ferner können hier auch haptische Parameter wie Blockpunkt, Mattierung oder Glanz beliebig getauscht werden. Ein Beispiel für einen Austausch einer Oberschichtkonstruktion ist in Fig. 3 gezeigt.

Die Anbindung der neuen Oberschichtkonstruktion kann durch eine erhöhte Temperatur, z.B. im Bereich von 20 bis 120°C, bevorzugt 30 bis 80 °C, gefördert werden.

In einer Ausführungsform ist es möglich, anstelle normaler Farbmittel wie Pigmenten in der Oberschichtkonstruktion, insbesondere in der oberen Polyolefinschicht und gegebenenfalls der oberen Haftungsschicht, IR-transparente Pigmente einzusetzen, die auch als Cool Color Pigmente bezeichnet werden, welche eine Erwärmung dieser Schichten aufgrund ihrer IR-Transparenz verhindern. Durch die transmittierte IR-Strahlung ist eine gezielte Temperaturerhöhung unterer Haftungsschichten und somit eine Haftungsverbesserung möglich oder eine Enthaftung gezielt steuerbar. Gegebenenfalls kann dort die IR-Absorption durch den Einsatz von Ruß in der unteren Haftungsschicht erhöht werden. Eine solche Ausführungsform ist in Fig. 4 gezeigt.

Ein besonderer Vorteil der vorliegenden Erfindung besteht darin, dass durch die PIB-enthaltenden Polyolefinschichten in dem Polyolefin-Mono- oder -Multischicht-Konstrukt selbstheilende Eigenschaften bereitgestellt werden.

Die Selbstheilung einer Verletzung, die beispielsweise durch einen Schnitt verursacht wird, kann durch Zusammenfügen der beiden Teile entweder bei Raumtemperatur (z.B. 23°C) über die Zeit oder durch Wärmeunterstützung, z.B. bei einer Temperatur in einem Bereich von 40 bis 100 °C erfolgen. Dabei wirken die kürzeren Polyisobutylen-Polymerketten als initialer Haftvermittler, welcher es erlaubt, längere Polyolefinketten teilweise in den anderen Teil migrieren zu lassen und somit eine zunehmende Haftung zu ermöglichen. Bei Raumtemperatur dauert dieser Prozess ca. 24 Stunden, bei 60 °C hingegen nur wenige Sekunden.

Eine möglichst vollständige Selbstheilung kann insbesondere dann erzielt werden, wenn alle Polyolefinschichten der Konstruktion oder zumindest alle Polyolefinschichten außer der oberen Polyolefinschicht Polyisobutylen-enthaltende Polyolefinschichten sind. In einer vorteilhaften Ausführungsform ist die obere Polyolefinschicht eine Polyisobutylen-enthaltende Polyolefinschicht, da eine Heilung besonders für die obere Schicht wünschenswert ist.

In einer bevorzugten Ausführungsform des Polyolefin-Mono- oder -Multischicht-Konstrukts enthalten daher alle Polyolefinschichten oder alle Polyolefinschichten außer der oberen Polyolefinschicht Polyisobutylen.

Eine obere Polyolefinschicht, die kein Polyisobutylen enthält, kann zweckmäßig sein, um die darunter liegenden Polyisobutylen-enthaltenden Polyolefinschichten vor Verklebung mit anderen Oberflächen und vor der Adhäsion von Staub und Schmutz zu schützen. Alternativ oder zusätzlich kann ein solcher Schutz aber gegebenenfalls auch durch eine ein- oder mehrschichtige Lackschicht als oberste Schicht wie vorstehend beschrieben erreicht werden.

Bei der vorstehenden Ausführungsform, bei der alle Polyolefinschichten außer der oberen Polyolefinschicht Polyisobutylen enthalten, ist es zweckmäßig, dass die obere Polyolefinschicht, die kein Polyisobutylen enthält, eine dünne obere Polyolefinschicht ist. Vorzugsweise weist diese Schicht ein Auftragsgewicht von 2 bis 70 g/m², bevorzugter 2 bis 25 g/m² und idealerweise 2 bis 10 g/m² auf, um die Dicke einer nicht vollkommen selbstheilenden Schicht so dünn wie möglich zu halten. Die unter der oberen Polyolefinschichten liegenden Polyolefinschichten können in diesem Fall z.B. ein Auftragsgewicht von 2 bis 200 g/m², bevorzugter 30 bis 120 g/m², aufweisen.

Das erfindungsgemäße Polyolefin-Mono- oder -Multischicht-Konstrukt ist in der Regel ein -Multischicht-Konstrukt, es kann aber gegebenenfalls auch ein Monoschicht-Konstrukt sein, bei dem als durch Polyolefindispersion gebildete Polyolefinschichten nur die eine Polyisobutylen-enthaltende Polyolefinschicht auf einem Träger angeordnet ist. Der Träger ist bevorzugt ein textiler Träger, bevorzugter ein textiler Träger, der mit einem Kaschiermaterial versehen ist, insbesondere ein Kaschiermaterial aus Polyolefin, das bevorzugt 75 bis 100 Gewichtsteile Polyolefin, das von Polyisobutylen verschieden ist, pro 100 Gewichtsteilen Polyolefin enthält.

Ein solches Monoschicht-Konstrukt eignet sich z.B. als Unterschichtkonstruktion eines Multischicht-Konstrukts wie vorstehend beschrieben.

Das erfindungsgemäße Polyolefin-Mono- oder -Multischicht-Konstrukt ist bevorzugt ein Kunstleder. Das erfindungsgemäße Polyolefin-Mono- oder -Multischicht-Konstrukt kann auf einem Bauteil angebracht werden, z.B. durch Vernähen oder Kleben, und als Bezugsmaterial dienen.

Die Erfindung betrifft ferner ein Verfahren zur Herstellung eines Polyolefin-Mono- oder -Multischicht-Konstrukts, umfassend eine oder mehrere Polyolefinschichten auf einem Träger insbesondere eines erfindungsgemäßen Polyolefin-Mono- oder -Multischicht-Konstrukts wie vorstehend und in den Ansprüche 1 bis 12 beschrieben,
wobei die eine oder mehreren Polyolefinschichten auf einem Substrat gebildet werden, indem für jede Polyolefinschicht eine Polyolefindispersion auf das Substrat oder über einer bereits auf dem Substrat gebildeten Polyolefinschicht aufgetragen und thermisch behandelt wird,
wobei mindestens eine der aufgebrachten Polyolefindispersionen eine Polyisobutylen-enthaltende Polyolefindispersion ist, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin in der Dispersion enthält, und
wobei das Substrat der Träger des Polyolefin-Mono- oder -Multischicht-Konstrukts ist oder das Substrat von dem gebildeten Mono- oder Multischichtfilm abgelöst und der andere Träger an den gebildeten Mono- oder Multischichtfilm angebracht wird, wobei bevorzugt zunächst der andere Träger, bevorzugt ein textiler Träger, auf der dem Substrat abgewandten Seite des Mono- oder Multischichtfilms aufgebracht wird und dann das Substrat abgezogen wird.

Alle vorstehenden Angaben zu dem erfindungsgemäßen Polyolefin-Mono- oder -Multischicht-Konstrukt, insbesondere den Polyolefinschichten, den Polyisobutylen-enthaltenden Polyolefinschichten, den Polyolefindispersion mit und ohne Polyisobutylen sowie den Ausgestaltungen des Konstrukts gelten naturgemäß entsprechend für das erfindungsgemäße Verfahren. Es wird daher auf diese Angaben verwiesen. Insbesondere enthält die mindestens ein Polyisobutylen-enthaltende Polyolefindispersion bevorzugt 0,1 bis 75 Gewichtsteile Polyisobutylen, bevorzugt 0,5 bis 75 Gewichtsteile Polyisobutylen, bevorzugter 25 bis 75 Gewichtsteile Polyisobutylen, besonders bevorzugt 40 bis 75 Gewichtsteile Polyisobutylen, pro 100 Gewichtsteilen Polyolefin in der Dispersion.

Zur Herstellung werden eine oder mehrere Polyolefindispersionen wie vorstehend beschrieben nacheinander auf ein Substrat aufgetragen. Das Aufbringen der Polyolefindispersionen, gegebenenfalls in Form einer Paste, auf das Substrat kann nach gängigen Verfahren durchgeführt werden, z.B. durch Streichen.

Die eine oder mehreren eingesetzten Polyolefindispersionen sind bevorzugt wässrige Polyolefindispersionen.

Jede aufgetragene Polyolefindispersion wird unter Bildung der Polyolefinschicht thermisch behandelt. Sofern die aufgetragene Polyolefindispersion einen Vernetzer enthält, kann es bei der thermischen Behandlung auch zur Vernetzung bzw. Härtung des Polyolefins kommen. Nach der Bildung der Polyolefinschicht kann der Vorgang durch Aufbringen einer weiteren Polyolefindispersion auf die gebildete Polyolefinschicht wiederholt werden. Mindestens eine der aufgebrachten Polyolefindispersionen ist eine Polyisobutylen-enthaltende Polyolefindispersion, die 0,1 bis 75 Gewichtsteile Polyisobutylen pro 100 Gewichtsteilen Polyolefin in der Dispersion enthält, wie vorstehend beschrieben.

Die thermische Behandlung kann z.B. bei einer Temperatur im Bereich von 80 °C bis 210 °C, bevorzugt im Bereich von 110 °C bis 180 °C, durchgeführt werden. Im Allgemeinen wird die aufgetragene Polyolefindispersion vor der thermischen Behandlung getrocknet. Bei der Trocknung wird Dispersionsmittel wie z.B. Wasser entfernt. Die Trocknung kann zweckmäßigerweise bei einer erhöhten Temperatur erfolgen, z.B. bei 40 bis 120 °C, bevorzugt 70 bis 100 °C. Die thermische Behandlung und die optionale Trocknung können z.B. in Trocknungs- bzw. Vernetzungsöfen durchgeführt werden.

Das Substrat kann der Träger des Polyolefin-Mono- oder -Multischicht-Konstrukts sein. Alternativ wird das Substrat durch einen anderen Träger ersetzt, indem das Substrat von dem gebildeten Mono- oder Multischichtfilm abgelöst und der andere Träger an den gebildeten Mono- oder Multischichtfilm angebracht wird. Der andere Träger wird dabei im Allgemeinen auf der Seite des Mono- oder Multischichtfilms angebracht, der der Seite entgegengesetzt ist, an die das Substrat angeordnet ist bzw. war. Die Reihenfolge von der Entfernung des Substrats und der Anbringung des anderen Trägers ist beliebig und kann gegebenenfalls auch gleichzeitig erfolgen.

Das erfindungsgemäße Verfahren wird bevorzugt als Umkehrstrichverfahren oder Umkehrbeschichtungsverfahren durchgeführt (siehe beispielsweise Ullmann's Encyclopedia of Industrial Chemistry, 6th ed., Wiley-VCH, Weinheim 2002, Kapitel "Leather Imitates" von C. Zürbig und H.-H. Kruse). Dabei wird das Substrat, auf dem der Mono- oder Mehrschichtfilm gebildet wurde, davon entfernt und stattdessen ein anderer Träger an den Film angebracht.

Das Substrat kann z.B. ein Release-Papier, Narbband, Silikonband oder Metallband sein, insbesondere wenn es durch einen anderen Träger ersetzt wird. Das Substrat kann gegebenenfalls auch ein textiler Träger sein, insbesondere wenn das Substrat der Träger ist. Der andere Träger kann auf übliche Weise an den Mono- oder Multischichtfilm angebracht werden, insbesondere durch Kaschieren.

Der andere Träger ist bevorzugt ein textiler Träger, besonders bevorzugt ein textiler Polyolefinträger. Der textile Träger ist besonders bevorzugt mit einem Kaschiermaterial versehen. Das Kaschiermaterial ist bevorzugt ein Polyolefinmaterial, bevorzugter ein Polyolefinmaterial, das 75 bis 100 Gewichtsteile Polyolefin, das von Polyisobutylen verschieden ist, pro 100 Gewichtsteilen Polyolefin enthält. Der textile Träger kann direkt oder nachträglich einkaschiert werden.

In einer bevorzugten Ausführungsform des erfindungsgemäßen Verfahrens werden mindestens zwei Polyolefinschichten gebildet, wobei die Polyolefinschicht, die mit der Polyisobutylen-enthaltenden Polyolefindispersion gebildet wird, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin in der Dispersion enthält, eine Haftungsschicht ist, und die zweite Polyolefinschicht, bezogen auf das fertiggestellte Polyolefin-Mono- oder -Multischicht-Konstrukt, eine über der Haftungsschicht liegende obere Polyolefinschicht ist, die mit einer Polyolefindispersion gebildet wird, die bevorzugt 75 bis 100 Gewichtsteile Polyolefin, das von Polyisobutylen verschieden ist, pro 100 Gewichtsteilen Polyolefin in der Dispersion enthält.

Das Polyolefin-Mono- oder -Multischicht-Konstrukt, insbesondere die obere Polyolefinschicht und gegebenenfalls die oberen Ersatzschichten, können durch ein herkömmliches narbgebendes Verfahren mit einer Ledernarbung, Textilnarbung oder einer technischen Oberfläche versehen werden. Es können übliche narbgebende Verfahren verwendet werden, z.B. mittels genarbtem Release-Papier, Narbband, Stahlprägen, Vakuumprägen oder Silikonprägen.

In einer bevorzugten Ausführungsform werden zwei separate Polyolefin-Mono- oder -Multischicht-Konstrukte (Teilkonstrukte) nach dem erfindungsgemäßen Verfahren gebildet, wobei ein Teilkonstrukt das Substrat aufweist und ein Teilkonstrukt den anderen Träger aufweist. Die beiden Teilkonstrukte werden dann jeweils über die dem Substrat bzw. dem anderen Träger abgewandten Seite miteinander verbunden, wonach das Substrat abgelöst wird, um ein zusammengesetztes Polyolefin-Multischicht-Konstrukt zu bilden.

Die Erfindung betrifft auch die Verwendung des erfindungsgemäßen Polyolefin-Mono- oder -Multischicht-Konstrukts wie vorstehend und in den Ansprüchen 1 bis 12 beschrieben als Bezugsmaterial und/oder Kunstleder.

Das erfindungsgemäße Polyolefin-Mono- oder -Multischicht-Konstrukt kann insbesondere als selbstheilendes Bezugsmaterial oder selbstheilendes Kunstleder verwendet werden.

Alternativ oder zusätzlich kann das erfindungsgemäße Polyolefin-Mono- oder -Multischicht-Konstrukt als Bezugsmaterial oder Kunstleder mit erneuerbarer Oberfläche verwendet werden. Dies ist möglich, da ein oberer Teil des Konstrukts, insbesondere die Oberschichtkonstruktion, ablösbar, insbesondere abziehbar, oder austauschbar ist. Je nach Aufbau des Konstrukts ist eine wiederholte Erneuerung der Oberfläche möglich.

Dies ermöglicht eine einmalige oder mehrmalige Schichtabnahme oder einen Schichtaustausch zur Variation des Oberflächendesigns und/oder zur Sicherstellung klinisch reiner Oberflächen.

Das erfindungsgemäße Polyolefin-Mono- oder -Multischicht-Konstrukt eignet sich insbesondere für Anwendungen im Transportwesen, insbesondere im Automobilbereich, in Innenräumen oder in der Industrie. Es kann z.B. als dekoratives Bezugsmaterial bzw. Kunstleder für Bauteile im Automobilinnenraum, wie Sitze oder Instrumententafeln, oder für Möbel eingesetzt werden.

Die Erfindung wird nun anhand von Ausführungsbeispielen weiter erläutert, die den Umfang der Erfindung in keiner Weise einschränken sollen. In den Abbildungen werden gleiche Ziffern für gleiche Komponenten verwendet.

Fig. 1 ist ein schematisches Beispiel eines erfindungsgemäßen Polyolefin-Mono- oder -Multischicht-Konstrukts im Querschnitt, z.B. ein Kunstleder. Die Polyolefinschichten sind durch eine Polyolefindispersion nach dem erfindungsgemäßen Verfahren gebildet.

Der textile Träger 1 ist vorzugsweise mit einem Kaschiermaterial aus Polyolefin versehen (nicht gezeigt), wodurch der textile Träger 1 besser an die untere Haftungsschicht 2 angebunden werden kann. Die untere Haftungsschicht 2 bildet die Unterschichtkonstruktion und ist eine PIB-enthaltende Polyolefinschicht, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin enthält. Über der unteren Haftungsschicht 2 befindet sich die obere Haftungsschicht 3. Die obere Haftungsschicht 3 ist eine PIB-enthaltende Polyolefinschicht, die 0,1 bis 75 Gewichtsteile, bevorzugt 25 bis 75 Gew.-Teile, besonders bevorzugt 40 bis 75 Gew.-Teile, Polyisobutylen pro 100 Gewichtsteilen Polyolefin enthält. Über der oberen Haftungsschicht 3 befindet sich die obere Polyolefinschicht 4. Die obere Polyolefinschicht 4 enthält 75 bis 100 Gewichtsteile Polyolefin, das von Polyisobutylen verschieden ist, pro 100 Gewichtsteilen Polyolefin. Die obere Polyolefinschicht 4 weist eine Narbung auf. Über der oberen Polyolefinschicht 4 kann als Schutz eine ein- oder mehrschichtige transparente oder transluzente Lackschicht aufgebracht sein (nicht gezeigt).

Die obere Haftungsschicht 3 und die obere Polyolefinschicht 4 bilden die Oberschichtkonstruktion. Beim Gebrauch sind die untere Haftungsschicht 2 und die obere Haftungsschicht 3 miteinander in Kontakt. Fig. 1 zeigt, dass die Oberschichtkonstruktion von der unteren Haftungsschicht 2 abgelöst werden kann (dunkler Pfeil) und wieder damit verbunden werden kann (helle Pfeile).

Die Oberschichtkonstruktion besteht aus mindestens zwei Schichten, einer narbtragenden oberen Polyolefinschicht 4 und einer haftvermittelnden Haftungsschicht 3. Die narbtragende obere Polyolefinschicht 4 wird idealerweise mit einem hohen Anteil an Polyolefin aufgebaut, um mögliche Erscheinungen wie kalten Fluss zu vermeiden. Die darunterliegende obere Haftungsschicht 3 ist für die wiederholbare Haftung verantwortlich. Hier werden höhere Anteile der PIBs verwendet. Auf der narbgebenden Schicht 4 können haptikgebende Lacke verwendet werden. Diese können aus 1-4 Schichten bestehen. Ferner wird die narbgebende obere Polyolefinschicht 4 meist mit farbgebenden Komponenten versetzt, um auch als farbtragende Schicht zu fungieren.

In der Unterschichtkonstruktion auf dem Textilträger 1, welche auf einem Bauteil fest vernäht werden kann, kann eine vergleichbare Haftungsschicht wie in der Oberschichtkonstruktion verwendet werden. Der textile Träger wird, je nach Anwendung, mit einer Kaschiermasse mit einem höheren Anteil an von PIB verschiedenem Polyolefin, z.B. 75 bis 100 Gewichtsteile pro 100 Gewichtsteilen Polyolefin, versehen und auf die Haftungsschicht 2 kaschiert. Der hohe Anteil an Nicht-PIB-Polyolefin ermöglicht eine gute Textilhaftung in der Dispersionsmasse durch Minimierung des kalten Flusses.

Durch das Zusammenfügen der oberen und unteren Haftungsschicht 2, 3 kommt es anfangs zu einer leichten Haftung, welche über die Zeit durch den kalten Fluss des PIBs zunimmt. Eine Steuerung ist beispielsweise auch über die Temperatur möglich. Die Anfangshaftung wird dabei durch den kurzkettigen Anteil der PIBs (z.B. Emulco AquaPIB^{®} 60-25-L02, PIB = Glissopal^{®} V 1500) bestimmt, welche eine spätere Diffusion der längeren Polymerketten, z.B. der höhermolekularen PIBs (z.B. Emulco AquaPIB^{®} 60-25-150, PIB = Oppanol^{®} B 15) oder der von PIB verschiedenen Polyolefine ermöglichen.

Die obere und untere Haftungsschicht 2, 3 können in diesem Aufbau beliebig oft getrennt und wieder verbunden werden, ohne dass es zu einer nennenswerten Reduktion der Haftung kommt. Selbst geringe Mengen an Oberflächenverunreinigungen, z.B. ölige Fingerabdrücke, führen zu keiner nennenswerten Reduktion der Haftung. Der Grund hierfür ist, dass die Öle von der PIB-enthaltenden Schicht aufgenommen und in die Schicht abgeführt werden.

Fig. 2 ist ein schematisches Beispiel eines weiteren erfindungsgemäßen Polyolefin-Mono- oder -Multischicht-Konstrukts im Querschnitt. Der Aufbau ist analog wie in Fig. 1, außer dass zwischen der unteren Haftungsschicht 2 und der oberen Haftungsschicht 3 eine obere Ersatzschicht 5 angeordnet ist. Die untere Haftungsschicht 2 und die obere Ersatzschicht 5 bilden in dieser Ausführungsform die Unterschichtstruktur.

Die obere Ersatzschicht 5 ist eine durch eine Polyolefindispersion gebildete Polyolefinschicht, die 75 bis 100 Gewichtsteile Polyolefin, das von Polyisobutylen verschieden ist, pro 100 Gewichtsteilen Polyolefin enthält. Die obere Ersatzschicht 5 weist eine Narbung auf und kann gegebenenfalls mittels eines Farbmittels gefärbt sein. Die Narbung der oberen Ersatzschicht 5 kann gleich oder verschieden von der Narbung der oberen Polyolefinschicht 4 sein. Auch die obere Ersatzschicht 5 kann mittels Farbmittel gefärbt werden.

Wird beispielsweise die obere Polyolefinschicht 4 irreversibel beschädigt oder verschmutzt, kann diese direkt mit der darauffolgenden oberen Haftungsschicht 3 von der nachfolgenden oberen Ersatzschicht 5 entfernt werden, die dann die neue obere Polyolefinschicht darstellt. Die kann beispielsweise im Sanitärbereich Verwendung finden, wo Kontaminationen vermieden werden sollen. Somit kann auch eine virenfreie und bakterienfreie Oberfläche garantiert werden.

In analoger Weise können zwischen der Unter- und Oberschichtstruktur eine oder mehrere analoge Zwischenschichtstrukturen aus oberer Ersatzschicht und unterer Haftungsschicht angeordnet werden, um ein Sandwichsystem mit alternierenden Haftungsschichten und genarbten Schichten zu erhalten, bei denen die Obersichtstruktur bzw. die Zwischenschichtstrukturen sukzessive abgezogen werden können, um eine neue Oberfläche zu schaffen.

Um die sequenzielle Entfernung der jeweiligen Oberschichtstruktur und ggf. der Zwischenschichtstruktur(en) zu gewährleisten, werden an den Außenseiten bei jeder Haftungsschicht Abziehschlaufen, z.B. aus Polyester, eingelassen. Diese Abziehschlaufen verhindern die Haftung zwischen den Schichten und ermöglichen lokal eine Abziehmöglichkeit.

Fig. 3 zeigt auf der linken Seite ein Polyolefin-Mono- oder -Multischicht-Konstrukt gemäß Fig. 1, bei dem die bisherige Oberschichtkonstruktion aus oberer Haftungsschicht 3 und oberer Polyolefinschicht 4 entfernt wird und durch eine neue Oberschichtkonstruktion aus zweiter oberer Haftungsschicht 6 und zweiter oberer Polyolefinschicht 7 ersetzt wird (rechte Seite). Wenn die Unterschichtkonstruktion auf einem Bauteil als Bezugsmaterial befestigt ist, kann auf diese Weise das Design des Konstrukts geändert werden, ohne eine komplette Entfernung des Konstrukts von dem Bauteil zu erfordern.

Fig. 4 zeigt das erfindungsgemäße Polyolefin-Mono- oder -Multischicht-Konstrukt gemäß Fig. 1 mit einer bestimmten Gestaltung der Schichten hinsichtlich der eingesetzten Farbmittel. Insbesondere ist die obere Polyolefinschicht 10 mit IR-transparenten Pigmenten (Cool Color Pigmenten) gefärbt. Die obere Haftungsschicht 9 kann gegebenenfalls auch mit solchen IR-transparenten Pigmenten gefärbt sein. Die untere Haftungsschicht 8 ist mit Ruß gefärbt.

Durch die IR-transparenten Pigmente in der Oberschichtkonstruktion wird eine Erwärmung dieser Schichten verhindert. Dies ermöglicht eine gezielte Temperaturerhöhung der unteren Haftungsschicht 8 und somit eine Haftungsverbesserung bzw. kann auf diese Weise eine gezielte Ablösung erreicht werden. Durch die IR-Absorption des Rußes in der unteren Haftungsschicht 8 wird dieser Effekt verstärkt.

### Beispiel

Ein Polyolefin-Multischicht-Konstrukt entsprechend der Fig. 1 wurde auf Basis der folgenden Komponenten hergestellt:

| | | |
|---|---|---|
| Hypod 1000 | DOW | wässrige Polyolefindispersion, Polyolefin von Polyisobutylen verschieden (Propylen-Copolymer), Feststoffgehalt 56 Gew.-% |
| AquaPIB 60-25-150 | Emulco | wässrige Polyisobutylen-Dispersion (BIP = Oppanol B15 (mittleres Molekulargewicht 108.000 g/mol), Feststoffgehalt 60 Gew.-% |
| Heliobeit L904 | Helio Beit | Pigmentpaste |
| Borchigel L75N (50 % in H₂O) | OMG Borchers GmbH | Rheologiemodifizierer auf Polyurethanbasis |
| BYK-024 | Byk | Entschäumer |
| Permutex XR-13-554 | Stahl | Polycarbodiimid-Vernetzer |
| PP-Interlock | Noon | Textil aus Polypropylen, 230 g/m² |

Aus den Komponenten wurden Pasten mit der in der folgenden Tabelle angegebenen Zusammensetzung hergestellt.

| Komponente | Menge in Gew.-Teilen (für narb- und farbgebende Schicht und Kaschierschicht) | Menge in Gew.-Teilen (für Haftungsschicht) |
|---|---|---|
| Hypod 1000 | 100 | 50 |
| AquaPIB 60-25-150 | - | 50 |
| Heliobeit L904 | 2 | 2 |
| Borchigel L75N (50 % in H₂O) | 2,5 | 2,5 |
| BYK-024 | 0,4 | 0,4 |
| Permutex XR-13-554 | 5 | - |

Die Komponenten für die jeweiligen Pasten werden zusammen unter Vakuum dispergiert.

Oberschichtkonstruktion 4+3: Auf ein Release-Papier wird die Paste der Narb- und farbgebenden Schicht aufgerakelt und bei 70 und 150 °C für jeweils 1 min getrocknet. Hierauf wird die Paste der Haftungsschicht aufgerakelt und bei 100 und 180 °C jeweils 1 min getrocknet.

Unterschichtkonstruktion 2+1: Auf ein Release-Papier wird die Paste der Haftungsschicht aufgerakelt und bei 70 und 180 °C für jeweils 1 min getrocknet. Hierauf wird die Paste der Kaschierschicht aufgerakelt, das Textil (PP-Interlock) eingelegt und bei 100 und 145 °C jeweils 1 min getrocknet.

Die zwei Konstruktionen werden mit den Haftungsschichten zueinander zeigend aufeinandergelegt, wobei sich die Oberschichtkonstruktion bevorzugt noch auf dem Release-Papier befindet. Mit etwas Druck werden die Konstruktionen miteinander verbunden, was ggf. durch leichte Erwärmung beschleunigt bzw. die Haftung verstärkt werden kann, und ggf. das Releasepapier von der Oberkonstruktion entfernt. Die Schichten können wiederholt durch Auseinanderziehen voneinander gelöst und wieder verbunden werden.

### Bezugszeichenliste

- 1: textiler Träger
- 2: untere Haftungsschicht (PIB-enthaltende Polyolefinschicht)
- 3: obere Haftungsschicht (PIB-enthaltende Polyolefinschicht)
- 4: obere Polyolefinschicht
- 5: obere Ersatzschicht (Polyolefinschicht)
- 6: zweite obere Haftungsschicht (PIB-enthaltende Polyolefinschicht)
- 7: zweite obere Polyolefinschicht
- 8: untere Haftungsschicht (PIB-enthaltende Polyolefinschicht), gefärbt mit Ruß
- 9: obere Haftungsschicht (PIB-enthaltende Polyolefinschicht), gegebenenfalls gefärbt mit IR-transparentem Pigment
- 10: obere Polyolefinschicht, gefärbt mit IR-transparentem Pigment

## Patentansprüche

1. Polyolefin-Mono- oder -Multischicht-Konstrukt, umfassend eine oder mehrere durch eine Polyolefindispersion gebildete Polyolefinschichten auf einem Träger, wobei mindestens eine Polyolefinschicht eine Polyisobutylen-enthaltende Polyolefinschicht ist, die 0,1 bis 75 Gewichtsteile Polyisobutylen pro 100 Gewichtsteilen Polyolefin in der Schicht enthält.

2. Polyolefin-Mono- oder -Multischicht-Konstrukt nach Anspruch 1, wobei mindestens eine Polyisobutylen-enthaltende Polyolefinschicht 0,5 bis 75 Gewichtsteile, bevorzugt 25 bis 75 Gew.-Teile, besonders bevorzugt 40 bis 75 Gew.-Teile, Polyisobutylen pro 100 Gewichtsteilen Polyolefin in der Schicht enthält.

3. Polyolefin-Mono- oder -Multischicht-Konstrukt nach einem der vorhergehenden Ansprüche, wobei das Polyisobutylen ein mittleres Molekulargewicht von mindestens 2000 g/mol, bevorzugt mindestens 40.000 g/mol, aufweist.

4. Polyolefin-Mono- oder -Multischicht-Konstrukt nach einem der vorhergehenden Ansprüche, wobei das von Polyisobutylen verschiedene Polyolefin ausgewählt ist aus Polyethylenen, Polypropylenen, Ethylen-Propylen-Copolymeren, Copolymeren von Ethylen und/oder Propylen mit einem oder mehreren C₄-C₁₀-Olefinen, bevorzugt alpha-Olefinen, Ethylen-Propylen-Dienen oder Mischungen davon, wobei das Polyolefin gegebenenfalls mit einer funktionellen Gruppe modifiziert ist.

5. Polyolefin-Mono- oder -Multischicht-Konstrukt nach einem der vorhergehenden Ansprüche,
wobei mindestens eine Polyolefinschicht eine mit einem Vernetzer vernetzte Polyolefinschicht ist, und/oder
wobei der Träger ein Release-Papier, Narbband, Silikonband, Metallband oder textiler Träger, bevorzugt ein textiler Träger, bevorzugter ein textiler Polyolefinträger, ist.

6. Polyolefin-Mono- oder -Multischicht-Konstrukt nach einem der vorhergehenden Ansprüche, umfassend mindestens zwei durch eine Polyolefindispersion gebildete Polyolefinschichten, wobei mindestens eine Polyisobutylen-enthaltende Polyolefinschicht eine Haftungsschicht ist und die zweite Polyolefinschicht eine über der Haftungsschicht liegende obere Polyolefinschicht ist, die bevorzugt 75 bis 100 Gewichtsteile Polyolefin, das von Polyisobutylen verschieden ist, pro 100 Gewichtsteilen Polyolefin in der Schicht enthält.

7. Polyolefin-Mono- oder -Multischicht-Konstrukt nach einem der vorhergehenden Ansprüche, umfassend eine Unterschichtkonstruktion, die eine untere Haftungsschicht enthält, und eine darüber liegende Oberschichtkonstruktion, die eine obere Polyolefinschicht und eine darunterliegende obere Haftungsschicht enthält, wobei die untere und die obere Haftungsschicht Polyisobutylen-enthaltende Polyolefinschichten sind, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin in der Schicht enthalten, und die obere Polyolefinschicht eine durch eine Polyolefindispersion gebildete Polyolefinschicht ist, die bevorzugt 75 bis 100 Gewichtsteile Polyolefin, das von Polyisobutylen verschieden ist, pro 100 Gewichtsteilen Polyolefin in der Schicht enthält.

8. Polyolefin-Mono- oder -Multischicht-Konstrukt nach Anspruch 7,
wobei die untere Haftungsschicht und die obere Haftungsschicht miteinander in Kontakt sind oder
wobei die Unterschichtkonstruktion eine obere Ersatzschicht umfasst, die über der unteren Haftungsschicht angeordnet ist und eine durch eine Polyolefindispersion gebildete Polyolefinschicht ist, die bevorzugt 75 bis 100 Gewichtsteile Polyolefin, das von Polyisobutylen verschieden ist, pro 100 Gewichtsteilen Polyolefin in der Schicht enthält, wobei zwischen der Oberschichtkonstruktion und der Unterschichtkonstruktion ein oder mehrere Zwischenschichtkonstruktionen mit jeweils einer weiteren oberen Ersatzschicht und einer weiteren unteren Haftungsschicht angeordnet sein können.

9. Polyolefin-Mono- oder -Multischicht-Konstrukt nach einem der Ansprüche 6 bis 8,
wobei die obere Polyolefinschicht oder die obere Polyolefinschicht und die obere Ersatzschicht eine narbtragende Schicht und/oder eine Farbmittel-enthaltende Schicht ist bzw. sind, wobei das Farbmittel bevorzugt ausgewählt ist aus anorganischen oder organischen Farbmitteln, Effektfarbmitteln, Metalleffektfarbmitteln, Quantumdots, IR-transparenten Farbmitteln, Fluoreszenzfarbmitteln, Phosphoreszenzfarbmitteln oder Mischungen davon, und/oder
wobei in mindestens einer Haftungsschicht, bevorzugt in mindestens der oberen Haftungsschicht, eine oder mehrere seitlich vom Konstrukt herausstehende Abziehvorrichtungen, bevorzugt Abziehschlaufen, eingelassen sind.

10. Polyolefin-Mono- oder -Multischicht-Konstrukt nach einem der vorhergehenden Ansprüche, wobei alle Polyolefinschichten oder alle Polyolefinschichten außer der oberen Polyolefinschicht Polyisobutylen enthalten.

11. Polyolefin-Mono- oder -Multischicht-Konstrukt nach einem der vorhergehenden Ansprüche, das mit einer ein- oder mehrschichtigen Lackschicht als obersten Schicht versehen ist.

12. Polyolefin-Mono- oder -Multischicht-Konstrukt nach einem der vorhergehenden Ansprüche, wobei das Polyolefin-Mono- oder -Multischicht-Konstrukt ein Kunstleder ist.

13. Verfahren zur Herstellung eines Polyolefin-Mono- oder -Multischicht-Konstrukts, umfassend eine oder mehrere Polyolefinschichten auf einem Träger, insbesondere eines Polyolefin-Mono- oder -Multischicht-Konstrukts nach einem der Ansprüche 1 bis 12,
wobei die eine oder mehreren Polyolefinschichten auf einem Substrat gebildet werden, indem für jede Polyolefinschicht eine Polyolefindispersion auf das Substrat oder über einer bereits auf dem Substrat gebildeten Polyolefinschicht aufgetragen und thermisch behandelt wird,
wobei mindestens eine der aufgebrachten Polyolefindispersionen eine Polyisobutylen-enthaltende Polyolefindispersion ist, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin in der Dispersion enthält, und
wobei das Substrat der Träger des Polyolefin-Mono- oder -Multischicht-Konstrukts ist oder das Substrat von dem gebildeten Mono- oder Multischichtfilm abgelöst und ein anderer Träger an den gebildeten Mono- oder Multischichtfilm angebracht wird, wobei bevorzugt zunächst der andere Träger, bevorzugt ein textiler Träger, auf der dem Substrat abgewandten Seite des Mono- oder Multischichtfilms aufgebracht wird und dann das Substrat abgezogen wird.

14. Verfahren nach Anspruch 13,
wobei die eine oder mehreren eingesetzten Polyolefindispersionen wässrige Polyolefindispersionen sind und/oder
wobei das Substrat ein Release-Papier, Narbband, Silikonband oder Metallband ist und/oder
der andere Träger ein textiler Träger, bevorzugter ein textiler Polyolefinträger, ist, wobei der textile Träger mit einem Kaschiermaterial, das bevorzugt ein Polyolefinmaterial ist, versehen sein kann, und/oder
der andere Träger ein textiler Träger ist, der durch Kaschieren an den Mono- oder Multischichtfilm angebracht wird.

15. Verfahren nach Anspruch 13 oder Anspruch 14, wobei mindestens zwei Polyolefinschichten gebildet werden, wobei die Polyolefinschicht, die mit der Polyisobutylen-enthaltenden Polyolefindispersion gebildet wird, die 0,1 bis 75 Gewichtsteile, bevorzugt 25 bis 75 Gew.-Teile, bevorzugter 40 bis 75 Gew.-Teile, Polyisobutylen pro 100 Gewichtsteilen Polyolefin in der Dispersion enthält, eine Haftungsschicht ist, und die zweite Polyolefinschicht, bezogen auf das fertiggestellte Polyolefin-Mono- oder -Multischicht-Konstrukt, eine über der Haftungsschicht liegende obere Polyolefinschicht ist, die mit einer Polyolefindispersion gebildet wird, die bevorzugt 75 bis 100 Gewichtsteile Polyolefin, das von Polyisobutylen verschieden ist, pro 100 Gewichtsteilen Polyolefin in der Dispersion enthält.

16. Verfahren nach irgendeinem der Ansprüche 13 bis 15, wobei
die thermische Behandlung bei einer Temperatur im Bereich von 80 °C bis 210 °C, bevorzugt im Bereich von 110 °C bis 180 °C, durchgeführt wird, wobei die aufgetragene Polyolefindispersion vor der thermischen Behandlung vorgetrocknet werden kann, und/oder
wobei die eine oder mehreren eingesetzten Polyolefindispersionen ferner unabhängig voneinander ein oder mehrere Additive ausgewählt aus Vernetzern, Füllstoffen, Verdickungsmitteln, Flammschutzmitteln, Stabilisatoren gegen Abbau oder Alterung und Farbmitteln enthält.

17. Verfahren nach irgendeinem der Ansprüche 13 bis 16, wobei zwei separate Polyolefin-Mono- oder -Multischicht-Konstrukte nach dem Verfahren gebildet werden, wobei ein Konstrukt das Substrat aufweist und ein Konstrukt den anderen Träger aufweist, und die beiden Konstrukte jeweils über die dem Substrat bzw, dem anderen Träger abgewandten Seite miteinander verbunden werden und das Substrat abgelöst wird.

18. Verwendung eines Polyolefin-Mono- oder -Multischicht-Konstrukts nach einem der Ansprüche 1 bis 12,
als Bezugsmaterial oder Kunstleder, insbesondere als selbstheilendes Bezugsmaterial oder selbstheilendes Kunstleder, und/oder
als Bezugsmaterial oder Kunstleder mit erneuerbarer Oberfläche, insbesondere durch eine ablösbare, insbesondere abziehbare, oder austauschbare Oberschichtkonstruktion des Bezugsmaterials bzw. Kunstleders.
